(19) Europäisches Patentamt
European Patent Office
Office européen des brevets

(11) Publication number: 0 379 730 A2

# (12) EUROPEAN PATENT APPLICATION

(21) Application number: 89124006.1

(22) Date of filing: 27.12.89

(51) Int. Cl.5: C08K 9/02, C08L 69/00, C08J 5/18

(30) Priority: 25.01.89 US 301289

(43) Date of publication of application: 01.08.90 Bulletin 90/31

(84) Designated Contracting States: DE FR GB IT NL

(71) Applicant: GENERAL ELECTRIC COMPANY
1 River Road
Schenectady New York 12305(US)

(72) Inventor: Gallucci, Robert Russel
1109 Tanglewood Drive
Mount Vernon Indiana 47620(US)
Inventor: Sieloff, Gloria Mary
4120 Kuebler Road
Evansville Indiana 47712(US)
Inventor: Campbell, Richard William
213 Bayer Drive Route 1
Evansville Indiana 47712(US)

(74) Representative: Catherine, Alain
General Electric France Service de Propriété Industrielle 18 Rue Horace Vernet
F-92136 Issy-Les-Moulineaux Cedex(FR)

## (54) Extruded thermoplastic articles having improved electrical properties and methods of preparation thereof.

(57) Extruded thermoplastic articles having improved electrical shielding and physical properties comprising a thermoplastic extrusion molding resin and conductive reinforcing filaments.

EP 0 379 730 A2

# EXTRUDED THERMOPLASTIC ARTICLES HAVING IMPROVED ELECTRICAL PROPERTIES AND METHODS OF PREPARATION THEREOF

## FIELD OF INVENTION

This invention relates to extruded plastic articles having enhanced electrical and good physical properties comprising thermoplastic extrusion molding resins having metal coated graphite reinforcement fibers uniformly dispersed within said resins. More particularly it relates to such articles wherein the resin is a polycarbonate and the metal is nickel.

## BACKGROUND OF THE INVENTION

Thermoplastic resins which may be used to form extruded articles, such as sheet and film of varying thicknesses, by a variety of known extrusion techniques are well known in the art.

Recent developments in the area of computer and business equipment applications have made it desirable to produce thermoplastic molding compositions, particularly for use as resins in various known forms of extrusion apparatus, to produce extruded articles, wherein the extruded articles possess a combination of good physical properties along with enhanced electrical properties, particularly with respect to shielding from electromagnetic interference (EMI) and radio frequency interference (RFI).

Various approaches have been attempted to achieve an improvement in the overall combination of electrical and physical properties of injection molded polycarbonate articles. One method to improve the electrical properties of plastic parts is to coat them with a metallic conductive paint or similar material. Coating the part adds extra cost and an additional processing step to the production of the finished item. In addition, the coating may be scratched off or otherwise lost reducing EMI/RFI shielding ability.

Methods have been devised to prepare thermoplastic resins with good EMI/RFI shielding capability by mixing the molten resin with an electrically conductive filler; for example conductive carbon black, metal powder, metal flake or metal fiber. The precompounded resin with conductive filler is then formed into a finished article. These methods often require large amounts of filler which reduce the physical properties of the plastic. The precompounding process can also physically break the metal flake or fiber reducing its effectiveness in providing EMI/RFI shielding. In addition, melt blending the conductive filler into the resin adds an additional step to the process to prepare the finished article. These problems have been addressed by the use of bundles of metal coated graphite fibers held together with a binder resin. These bundles can be dry mixed with the thermoplastic resin and then injection molded into the finished article with no precompounding. Use of metal coated graphite fiber bundles with thermoplastic resins for injection molding is described in E.P. Application Nos. 0 208 873 and 0 248 384 published on January 21, 1987 and December 9, 1987, respectively. The fiber bundles are composed of metal coated graphite conductive reinforcing filaments held together with a film forming plastic adhesive. The dry blend of thermoplastic (generally pellets or powder) and fiber bundles is melt blended during the molding of the finished plastic part. The degree of mixing of the fiber bundles with the matrix resin during this processing is important. Too little mixing and the fiber bundles do not disperse, too much mixing and the fibers break. In either case EMI/RFI shielding is reduced. The afore mentioned applications rely on the high shear process of injection molding to disperse the fiber bundles in the thermoplastic resin. We have found that, surprisingly, the lower shear process of extrusion into sheet or film also gives good dispersion of metal coated fibers into the thermoplastic resin. In this regard the use of nickel coated graphite fiber (NCGF) bundles and polycarbonate thermoplastic are especially effective.

## SUMMARY OF THE INVENTION

It is an object of this invention to provide extruded thermoplastic articles, such as sheets and films, having enhanced electrical and physical properties comprising at least one polycarbonate molding resin having conductive metal coated graphite reinforcing filaments well dispersed therethrough.

Another object of the invention is to provide extruded articles, as described above, wherein the metal is

nickel.

A further aspect of the invention is to provide extruded articles, as described above, wherein the filaments have been added to the thermoplastic molding resin, prior to extrusion, in the form of elongated granules composed of primarily a bundle of conductive reinforcing filaments extending generally parallel to each other longitudinally and substantially uniformly dispersed throughout the granules is a thermally stable, film forming thermoplastic adhesive.

A still further aspect of the invention is to provide a method of preparing extruded articles as described above, which comprises extruding a molten mixture of a thermoplastic molding resin and conductive reinforcing filaments through a die having the form of the desired final product.

According to yet another aspect of the invention there is provided an optional method, as described above, for preparing extruded thermoplastic articles, having enhanced electrical and physical properties, of greater homogeneity by passing the melt from the extruder through a low shear mixing apparatus prior to passage through the forming die and rollers.

## DETAILED DESCRIPTION OF THE INVENTION

The extrusion of a blend of metal coated graphite fibers and a thermoplastic polycarbonate resin results in a finished article with improved electrical properties, specifically reduced volume and surface resistivity and increased ability to block electromagnetic and radio frequency waves. This is due to the well dispersed metal coated graphite fibers.

Thermoplastic polycarbonate molding resins useful in preparation of the products of the invention are well known and are described together with methods for the preparation inter alia, in U.S. Patent Nos. 3,161,615; 3,220,973; 3,312,659; 3,312,660; 3,313,777; 3,666,614 and 3,939,672, all of which are incorporated herein by reference. These polycarbonates may be prepared by a variety of conventional and well known processes which include, inter alia, interfacial polymerization, pyridine process, transesterification, and melt polymerization. A convenient process for the preparation of these polycarbonates is the interfacial polymerization process involving the co-reaction of at least one dihydric phenol with a carbonate precursor. Typically, the dihydric phenols utilized may be represented by the general formula

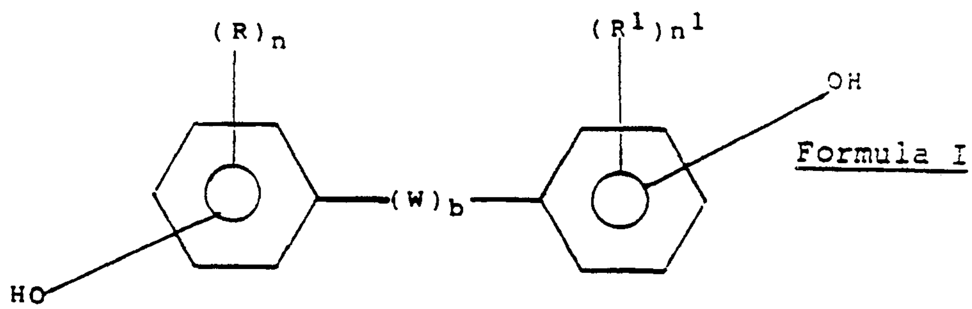

Formula I

wherein

R is independently selected from monovalent hydrocarbon radicals, monovalent hydrocarbonoxy radicals, and halogen radicals;

$R^1$ is independently selected from monovalent hydrocarbon radicals, monovalent hydrocarbonoxy radicals, and halogen radicals;

W is selected from divalent hydrocarbon radicals, or

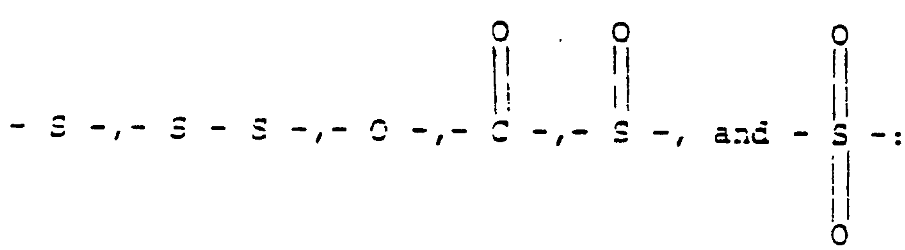

b is either zero or one; and

n and $n^1$ are independently selected from integers having a value of from 0 to 4 inclusive.

The monovalent hydrocarbon radicals represented by R and $R^1$ include the alkyl, cycloalkyl, aryl, aralkyl and alkaryl radicals. The preferred alkyl radicals are those containing from 1 to about 12 carbon atoms. The The preferred cycloalkyl radicals are those containing from 4 to about 8 ring carbon atoms. The preferred aryl radicals are those containing from 6 to 12 ring carbon atoms, i.e. phenyl, naphthyl, and biphenyl. The preferred aralkyl and alkaryl radicals are those containing from 7 to about 14 carbon atoms.

The monovalent hydrocarbonoxy radicals may be represented by the general formula $-OR^1$ where $R^1$ is a monovalent hydrocarbon radical of the type described hereinafore. Preferred monovalent hydrocarbonoxy radicals are the alkoxy and aryloxy radicals.

The divalent hydrocarbon radicals represented by W include the alkylene radicals, the alkylidene radicals, the cycloalkylene radicals, and the cycloalkylidene radicals. The preferred cycloalkylene and cycloalkylidene radicals are those containing from 6 to about 16 ring carbon atoms. The preferred alkylene radicals are those containing from 2 to about 30 carbon atoms. The preferred alkylidene radicals are those containing from 1 to about 30 carbon atoms.

Some illustrative non-limiting examples of dihydric phenols of Formula I include:

2,2-bis(4-hydroxyphenyl)propane(bisphenol-A);
bis(4-hydroxyphenyl)methane;
2,2-bis(3,5-dibromo-4-hydroxyphenyl)propane;
2,2-bis(3,5-dimethyl-4-hydroxyphenyl)propane;
1,1-bis(4-hydroxyphenyl)decane;
1,1-bis(4-hydroxyphenyl)cyclododecane;
1,5-bis(4-hydroxyphenyl)pentane;
4,4′-thiodiphenol;
1,1-bis(4-hydroxyphenyl)cyclohexane;
bis(4-hydroxyphenyl)ether; and
4,4′-dihydroxyphenyl.

Other dihydric phenols are also available and are disclosed, inter alia, in U.S. Patent Nos. 2,999,833, 3,927,365 and 3,334,154, all of which are incorporated herein by reference.

It is, of course, possible to employ a mixture of two or more different dihydric phenols as well as individual dihydric phenols in the preparation of the instant carbonate polymers.

The carbonate precursor employed may be a carbonyl halide, a carbonate ester, or a bishaloformate. The carbonyl halides are carbonyl bromide, carbonyl chloride, and mixtures thereof. Typical of the carbonate esters are diphenyl carbonate; di(halophenyl, carbonates such as di(chlorophenyl) carbonate, di-(bromophenyl) carbonate, and di(trichlorophenyl) carbonate; di(alkylphenyl) carbonates such as di(tolyl) carbonate; di(naphthyl) carbonate; di(halonaphthyl) carbonates; phenyl tolyl carbonate; chlorophenyl chloronaphthyl carbonate; and mixtures thereof.

The bishaloformates include the bis-haloformates of dihydric phenols such as bisphenol-A and hydroquinone; bishaloformates of glycols such as ethylene glycol, neopentyl glycol, and polyethylene glycol and the like. While other carbonate precursors will occur to those skilled in the art carbonyl chloride, also known as phosgene, is the preferred carbonate precursor.

The polycarbonates of the instant invention contain at least the following recurring structural unit:

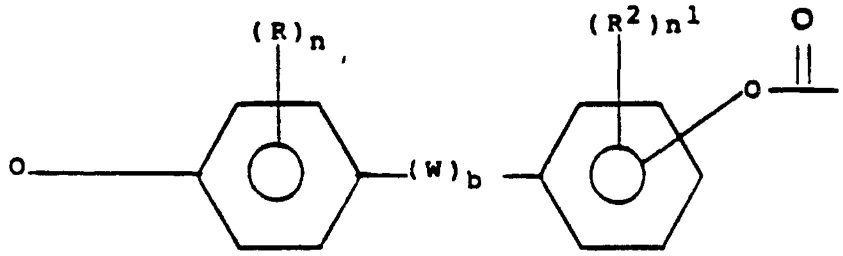

Formula II

where R, $R^1$, W, b, n and $n^1$ are as defined hereinafore. These polycarbonates generally have an intrinsic viscosity, as measured in methylene chloride at 25° C, of at least about 0.3 dl/gm, preferably from about 0.4 to about 1.0 dl/gm.

In addition to the polycarbonates describd hereinafore derived from a dihydric phenol and a carbonate precursor the instant invention also includes the thermoplastic randomly branched polycarbonates. These branched polycarbonates may be obtained by the reaction of said dihydric phenol, carbonate precursor, and a minor amount of a branching agent. The branching agent is generally a polyfunctional aromatic compound containing at least three functional groups which may by hydroxyl, carboxyl, carboxylic anhydride, haloformyl, and mixtures thereof. These polyfunctional aromatic compounds are well known in the art and are described, inter alia, in U.S. Patent Nos. 3,525,712; 3,541,049; 3,544,514; 3,635,895; 3,816,373; 4,001,184 and 4,204,047, all of which are incorporated herein by reference.

The term "polycarbonate" as used herein is inclusive of copolyester-polycarbonates, i.e., resins which contain, in addition to recurring polycarbonate chain units of the formula:

$$\left[ O - D - O - \overset{O}{\overset{\|}{C}} \right]$$

(IIIa)

wherein D is a divalent aromatic radical of the dihydric phenol employed in the polymerization reaction, repeating or recurring carboxylate units, for example of the formula:

$$\left( O - \overset{O}{\overset{\|}{C}} - R^1 - \overset{O}{\overset{\|}{C}} - O \right) \quad \text{(IIIb)}$$

wherein $R^2$ is as defined below.

The copolyester-polycarbonate resins are also prepared by interfacial polymerization technique, well known to those skilled in the art; see for example the U.S. Patents 3,169,121 and 4,487,896.

In general, any dicarboxylic acid conventionally used in the preparation of linear polyesters may be utilized in the preparation of the copolyester-carbonate resins of the instant invention. Generally, the dicarboxylic acids which may be utilized include the aliphatic dicarboxylic acids, the aromatic dicarboxylic acids, and the aliphatic-aromatic dicarboxylic acids. These acids are well known and are disclosed for example in U.S. Patent No. 3,169,121 which is hereby incorporated herein by reference. Representative of such aromatic dicarboxylic acids are those represented by the general formula:

$HOOC{-}R^2{-}COOH$ (IV)

wherein $R^2$ represents an aromatic radical such as phenylene, napthylene, biphenylene, substituted phenylene and the like; a divalent aliphatic-aromatic hydrocarbon radical such as an aralkyl or alkaryl radical; or two or more aromatic groups connected through non-aromatic linkages of the formula:

--E--

wherein E is a divalent alkylene or alkylidene group. E may also consist of two or more alkylene or alkylidene groups, connected by a non-alkylene or alkylidene group, such as an aromatic linkage, an ether linkage, a carbonyl linkage, a silicon-containing linkage, or by a sulfur-containing linkage such as sulfide, sulfoxide, sulfone and the like. In addition, E may be a cycloaliphatic group of five to seven carbon atoms, a sulfur-containing linkage, such as sulfide, sulfoxide or sulfone; an ether linkage; a carbonyl group; a direct bond; a tertiary nitrogen group; or a silicon-containing linkage. Other groups which E may represent will occur to those skilled in the art. For purposes of the present invention, the aromatic dicarboxylic acids are preferred. Thus, in the preferred aromatic difunctional carboxylic acids, $R^2$ is an aromatic radical such as phenylene, biphenylene, naphthylene, or substituted phenylene. Some nonlimiting examples of suitable aromatic dicarboxylic acids which may be used in preparing the poly(estercarbonate) resins of the instant invention include phthalic acid, isophthalic acid, terephthalic acid, homophthalic acid, o-, m-, and p-phenylenediacetic acid, and the polynuclear aromatic acids such as diphenyl dicarboxylic acid, and isomeric naphthalene dicarboxylic acids. The aromatics may be substituted with Y groups. Y may be an inorganic atom such as chlorine, bromine, fluorine and the like; an inorganic group such as the nitro group; an organic group such as alkyl; or an oxy group such as alkoxy, it being only necessary that Y be inert to and unaffected by the reactants and the reaction conditions. Particularly useful aromatic dicarboxylic acids are those represented by the general formula:

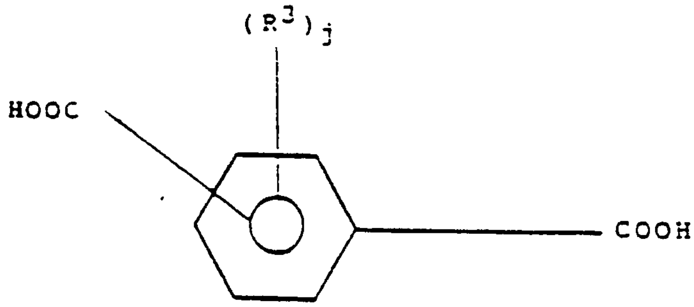

(V)

wherein j is a positive whole integer having a value of from 0 to 4 inclusive; and each $R^3$ is independently selected from the group consisting of alkyl radicals, preferably lower alkyl radicals (containing from 1 to about 6 carbon atoms).

Mixtures of these dicarboxylic acids may be employed. Therefore, where the term dicarboxylic acid is used herein it is to be understood that this term includes mixtures of two or more different dicarboxylic acids.

Most preferred as aromatic dicarboxylic acids are isophthalic acid, terephthalic acids, and mixtures thereof. A particularly useful difunctional carboxylic acid comprises a mixture of isophthalic acid and terephthalic acid wherein the weight ratio of terephthalic acid to isophthalic acid is in the range of from about 10:1 to about 0.2:9.8.

Rather than utilizing the dicarboxylic acid per se, it is possible, and sometimes even preferred, to employ the reactive derivatives of said acid. Illustrative of these reactive derivatives are the acid halides. The preferred acid halides are the acid dichlorides and the acid dibromides. Thus, for example instead of using isophthalic acid, terephthalic acid or mixtures thereof, it is possible to employ isophthaloyldichloride, terephthaloyl dichloride, and the mixtures thereof.

The proportions of reactants employed to prepare the copolyester-carbonate resins of the invention will vary in accordance with the proposed use of the product resin. Those skilled in the art are aware of useful proportions, as described in the U.S. patents referred to above. In general, the amount of the ester bonds may be from about 5 to about 90 mole percent, relative to the carbonate bonds. For example, 5 moles of bisphenol-A reacting completely with 4 moles of isophthaloyl dichloride and 1 mole of phosgene would give a copolyester-carbonate of 80 mole percent ester bonds.

The preferred polycarbonates for use in the present invention are those derived from bisphenol-A and phosgene and having an intrinsic viscosity of about 0.3 to about 1.5 deciliters per gram in methylene chloride at 25°.

The carbonate polymers of the instant invention may optionally have admixed therewith the commonly known and used additives such as antioxidants, inert fillers such as clay, mica, talc, and glass; impact modifiers; ultraviolet radiation absorbers such as benzophenones; hydrolytic stabilizers such as the epoxides taught in U.S. Patent Nos. 3,489,716; 4,138,379 and 3,839,247, all of which are incorporated herein by reference; color stabilizers such as the organophosphites disclosed in U.S. Patent Nos. 3,305,520 and 4,118,370, both of which are incorporated herein by reference; and flame retardant agents.

The filaments useful in the practice of the invention include metal coated graphite fibers. The metal coated graphite fibers are carbon filaments which are coated by a thin continuous layer of metal and may be prepared by various electroplating processes. The preferred metal coated graphite fibers are those wherein the metal is nickel which has been electroplated onto the fibers. The fibers are bound together with a thermoplastic adhesive. The adhesive binder is needed to improve dispersion of the fibers in the molten polycarbonate resin during extrusion and also hold the bundles together prior to extrusion. Fiber bundles may be between 0.1-2.0 inches long and 0.03-0.25 inches in diameter. Typically, individual fibers will be 5-15 microns in diameter.

It is necessary that the adhesive chosen should be one which will not degrade the molding resin. Preferred adhesives for use in connection with polycarbonate molding resins are plasticized polycarbonates. Other adhesives useful in preparing the filament granules for use in connection with invention are described in EP Appln. Nos. 0 208 873 and 0 248 384 incorporated herein by reference.

Nickel coated graphite fiber (NCGF) granules useful in the practice of the invention are sold by the American Cyanamid Co. under the designation db550.

In the practice of a preferred embodiment of invention the polycarbonate component is present at a concentration of about 99.5 to about 60% wt. and the NCGF at a concentration of about 0.5 to 40% wt.

More preferably, the polycarbonate is present at a concentration of about 95 to about 70% wt. and the NCGF at a concentration of about 5 to 30% wt.

According to another embodiment of the invention there is provided a method for preparing extruded plastic articles having enhanced electrical and physical properties comprising the steps of passing an extrudate comprising at least one thermoplastic resin and conductive reinforcing filaments uniformly dispersed therethrough through a die having the profile of the desired product and collecting said product by known means such as take up rollers in the case of films and sheets.

The conductive reinforcing filaments may be added to the molding resin in the form of elongated granules each containing a bundle of conductive reinforcing filaments extending generally parallel to each other longitudinally of each of the granules and substantially uniformly dispersed throughout the granule is a thermally stable, film forming thermoplastic adhesive.

In a preferred aspect of the above embodiment, wherein said molding resin comprises at least one polycarbonate extrusion molding resin, the mixture of molding resins and elongated granules are dry blended, added to an extruder wherein the molding resin melts, the granules break up and the NCGF is dispersed through the molten resin, and the extrudate is then forced through a die to form the desired articles. When the articles are sheets or films the extrudate is forced through a die into the gap formed by two cylindrical rollers to be formed into the desired sheet or film.

The fiber bundles may also be added to the extruder concurrently with the polycarbonate resin by the use of a separate feeder system. Additionally, the metal coated graphite fiber bundles may be added to the molten polycarbonate downstream from the feed hopper of the extruder. Other additives, including additional resin may also be added through this additional entry port.

Sheet or film end product formed by extrusion of the polycarbonate/NCGF blend will generally be in the form of sheets of from about 0.03 to about 1.0 inch in thickness or in the form of film about 0.5 to about 30 mils in thickness.

Sheets and films prepared in accordance with the invention can be used in the production of devices, such as computers, in which EMI/RFI shielding and low volume resistivity are desirable.

Below are examples of the invention. These examples are intended to illustrate rather than narrow the general inventive concept of the invention.

## EXAMPLES 1-3

Blends of 80-95 wt. percent polycarbonate resin with 5-20% NCGF fiber bundles were gently tumbled until throughly mixed.

The resultant mixture was then fed to a 2.5 inch single screw extruder, the screw turning at the rate of 50-150 rpm. The mixture was heated at 520-575° C whereby the resin melted, the granules broke up and the fibers were dispersed throughout the molten resin.

The melt was then extruded through a die to form sheets having 30-50 mil thickness. The sheets were taken up on rollers.

Physical and electrical properties are shown in Table I. the following test methods were used to evaluate the samples:

1) EMI Shielding (Dual Champber Test Method) ASTM ES7-83; 3x6 in. specimen.

2) Volume Resistivity (RV) Adaptation of ASTM D257. Sample ends are coated with silver paint after sanding to allow good electrical contact.

3) Surface Resistivity (Rs) is measured between two 2cm x 2cm square conductive patches on the part spaced 2cm apart. Conductive patches are prepared using silver paint.

4) Physical Properties; Tensile Properties ASTM D882.

TABLE I

| ELECTRICAL & PHYSICAL PROPERTIES OF POLYCARBONATE FILM WITH NCGF | | | |
|---|---|---|---|
| Example | 1 | 2 | 3 |
| Thickness mils | 30 | 30 | 50 |
| Wt. % NCGF* | 5 | 20 | 20 |
| Wt. % Polycarbonate* | 95 | 80 | 80 |
| Electrical Properties | | | |
| Shielding: decibels (dB) | | | |
| dB @ 30 MHz | 3 | 24 | 42 |
| dB @ 100 MHz | 3 | 21 | 32 |
| dB @ 300 MHz | 14 | 34 | 46 |
| dB @ 1000 MHZ | 14 | 18 | 39 |
| Surface Resistivity (Ohms/Sq) | $10^6$ | $10^3$-$10^4$ | $10^3$-$10^4$ |
| Volume Resistivity (Ohm-cm) | $10^6$ | 0.40-0.08 | 0.02-0.05 |
| Physical Properties (machine direction/transverse direction | | | |
| Tensile Yield Kpsi | 11/9.5 | 14.2/7.2 | 16.4/9.2 |
| Tensile Break Kpsi | 9.5/7.9 | 14.2/7.1 | 16.4/9.2 |
| Elongation @ Break % | 5/12 | 3/4 | 3/3 |
| Tensile Modulus Kpsi | 366/228 | 800/320 | 732/330 |
| Gardner Impact in-lbs. | 80 | 20 | 20 |

*NCG Fibers, dB550®, from American Cyanamid Co.
*Lexan® polycarbonate, 141-111, from GE Co.

## EXAMPLES 4-7

Film samples were prepared in accordance with Examples 1-3, wherein flame retardant polycarbonate Lexan® 94C, GE Co.) had been added as the polycarbonate component, said films having the following thickness, polycarbonate content and NCGF contents.

| Example | 4 | 5 | 6 | 7 |
|---|---|---|---|---|
| Thickness (mils) | 30 | 30 | 30 | 30 |
| Wt. % Polycarbonate | 95 | 90 | 85 | 100 |
| Wt. % NCGF | 5 | 10 | 15 | 0 |

In this case the two components were separately added to the feed zone of the extruder using two calibrated feeder systems.

Physical and electrical properties are shown in Table II. Test methods were the same as Examples 1-3. Sample 7 contains no NCGF bundles and is shown for comparative purposes. The samples with NCGF fiber shows improved electrical properties and enhanced tensile modulus. Good resistance to ignition is retained in all samples.

The flammability of film samples prepared according to Examples 4-7 was determined in accordance with U.L. Bulletin 94. Electrostatic Decay was determined by an Adaption of FTM 101B. Samples are wiped with Isopropyl alcohol, placed in the apparatus charged with ± 5KV (DC) and the time to full discharge measured.

TABLE II

| ELECTRICAL & PHYSICAL PROPERTIES OF FLAME RETARDANT POLYCARBONATE FILM WITH NCGF | | | | |
|---|---|---|---|---|
| EXAMPLE | 4 | 5 | 6 | 7 |
| Thickness mils | 30 | 30 | 30 | 30 |
| Wt. % NCGF* | 5 | 10 | 15 | 0 |
| Wt. % Polycarbonate | 95 | 90 | 85 | 100 |
| Electrical Properties | | | | |
| Shielding: dB 30-1000 MHz | 3-14 | 18-34 | 33-48 | 0 |
| Surface Resistivity Ohms/Sq | $10^6$ | $10^3$-$10^4$ | $10^3$-$10^4$ | 10 |
| Volume Resistivity Ohm-cm | $10^6$ | 4-9 | 0.17-0.22 | $10^{16}$ |
| Static Decay, sec. | 0.01 | 0.01 | 0.01 | >30 |
| Physical Properties (machine direction/transverse direction) | | | | |
| Tensile Yield Kpsi | 11.2/8.8 | 14.7/8.7 | 17.7/9.2 | 10/10 |
| Tensile Break Kpsi | 9.3/8.1 | 14.7/8.5 | 17.6/9.1 | 8.8/8.8 |
| Elongation @ Brk.% | 6/10 | 3/6 | 3/4 | 40/40 |
| Tensile Mod. Kpsi | 364/231 | 559/258 | 714/305 | 320/320 |
| Gardner Impt. in-lbs | >80 | >40 | 20 | 60 |
| UL-94 Flammability | V-O | V-O | V-O | V-O |

*NCGF, dB550 from American Cyanamid Co.
*Lexan® polycarbonate, 940 from GE Co.

The foregoing examples show that extruded films prepared in accordance with the invention have significantly increased electrical shielding properties combined with good physical properties thereby showing the good dispersion of the nickel coated fiber. The actual dispersion of the fibers can be checked by x-ray analysis and, in the case of thin films, optical microscopy. The compositions comprising the flame retardants retain good anti-flammability properties.

While the invention has been described with respect to various specific examples and embodiments, it is to be understood that the invention is not limited thereto and that it can be variously practiced within the scope of the following claims.

## Claims

1. A formed extruded plastic article having enhanced electrical and physical properties comprising at least one polycarbonate molding resin having conductive metal coated graphite reinforcing fibers well dispersed therethrough.

2. The article of claim 1 wherein the form is selected from the group consisting of sheets and films wherein said thermoplastic molding resin comprises at least one polycarbonate resin and said conductive reinforcing fibers comprise nickel coated graphite fibers.

3. The article of claim 2 wherein the polycarbonate content is from about 99.5 to about 60% wt. and the fiber content from about 0.5 to 40% wt. as measured by polycarbonate and fiber.

4. The article of claim 3 wherein the polycarbonate content is from about 95 to about 75% wt. and the fiber content from about 5 to about 25% wt.

5. The article of claim 3 further comprising at least one additive selected from the group consisting of flame retardants, stabilizers, flow aids, mold releases, pigments, colorants, impact modifiers and antioxidants.

6. The article of claim 2 comprising a sheet having a thickness from about 0.03 to about 1 inch.

7. The article of claim 2 comprising a film having a thickness from about 0.5 to about 30 mils.

8. A method for the preparation of extruded thermoplastic articles, having enhanced electrical and physical properties, comprising the steps

a) mixing at least one thermoplastic polycarbonate resin with conductive reinforcing filaments;

b) adding the mixture to an extruder;

c) melting the resin in the extruder and dispersing the filaments through the molten resin; and

d) extruding the molten mixture through a die having the form of the final product.

9. The method of claim 8 wherein the filaments are added to the thermoplastic polycarbonate resin in the form of elongated granules each comprising a bundle of conductive reinforcing filaments extending generally parallel to each other longitudinally of each of the granules and substantially uniformly dispersed throughout the granule is a thermally stable, film forming thermoplastic adhesive.

10. The method of claim 9 wherein said thermoplastic adhesive comprises a polycarbonate resin with plasticizer.

11. The method of claim 9 wherein the elongated filament granules are dry blended with the thermoplastic molding resin prior to addition to and melting in the extruder.

12. The method of claim 8 wherein the fibers are added to the polycarbonate resin after it has been melted.

13. The method of claim 3 wherein the extrudate is further homogenized by low shear mixing.